# FASCICULE DE BREVET EUROPEEN

(11) **EP 3 899 286 B1**
(45) Date de publication et mention de la délivrance du brevet: **19.07.2023**
(21) Numéro de dépôt: 19845600.6
(22) Date de dépôt: 17.12.2019
(51) Int. Cl.: F15B 5/00, G05B 11/42, G05B 19/44

(54) **DOUBLE CORRECTEUR POUR COMPENSATION DE MÉCANISME DISSYMÉTRIQUE**
DOPPELKORREKTOR ZUR KOMPENSATION VON ASYMMETRISCHEM MECHANISMUS
DOUBLE CORRECTOR FOR ASYMMETRICAL MECHANISM COMPENSATION

(30) Priorité: 17.12.2018 FR 1873075
(43) Date de publication de la demande: 27.10.2021
(73) Titulaire: SAFRAN AIRCRAFT ENGINES, 75015 Paris (FR)
(72) Inventeur: LE BRUN, Christophe, Marc, Alexandre, 77550 Moissy-Cramayel (FR); DENEUVE, Sébastien, Jean, Fernand, 77550 Moissy-Cramayel (FR)
(74) Mandataire: Regimbeau
(86) Numéro de dépôt international: PCT/FR2019/053116
(87) Numéro de publication internationale: WO 2020/128298

(56) Documents cités:
- EP-A2- 1 441 266
- US-B2- 6 745 084

## Description

### DOMAINE TECHNIQUE GENERAL

L'invention concerne la régulation électronique de vanne, en particulier le contrôle de commande de valve.

L'invention trouve notamment application dans les turbomachines pour aéronef, comme l'open rotor par exemple.

L'invention sera décrite dans ce contexte, mais est applicable à tout mécanisme présentant une dissymétrie de fonctionnement non souhaitée ou involontaire.

### ETAT DE L'ART ET PRESENTATION DU PROBLEME IDENTIFIE PAR LE DEMANDEUR

L'Open Rotor est un moteur d'avion disposant d'une architecture constituée d'un générateur de gaz et d'un propulseur muni d'une turbine de puissance, d'un réducteur épicycloïdal (appelé PGB pour *Propeller GearBox)* et d'un doublet d'hélices contrarotatives non carénées à calage variable.

La transmission de couples très importants aux hélices entraîne des rejections thermiques élevées qui peuvent endommager la PGB ainsi que d'autres équipements qui sont conçus pour fonctionner dans certaines plages de températures restreintes.

La PGB est à la fois refroidie et lubrifiée par de l'huile. Afin d'obtenir la température désirée, une vanne trois voies d'un circuit hydraulique est utilisée pour gérer le ratio entre de l'huile refroidie par un échangeur à eau et l'huile non-refroidie :
- en position de butée « 0 » (ce qui correspond à une commande de 0 V), l'huile en sortie du circuit provient uniquement de l'huile traversant l'échangeur,
- en position de butée « 10 » (ce qui correspond à une commande de 10 V), l'huile en sortie du circuit n'est pas refroidie, et
- une position intermédiaire correspond à un mélange entre l'huile bypassée et l'huile refroidie.

Une régulation de type cascade a été adoptée pour répondre aux exigences de performances sur tout le domaine de vol du moteur :
- une boucle globale est utilisée pour asservir la température en amont des pompes et permet de déterminer une consigne de position de la vanne x_cons, à partir de l'écart de température T_cons-T_mes (obtenue à l'aide d'un capteur 35),
- une boucle locale est utilisée pour asservir la position de la vanne. La boucle locale permet de délivrer le signal de commande x_com à la vanne, à partir de l'écart de position x_e.

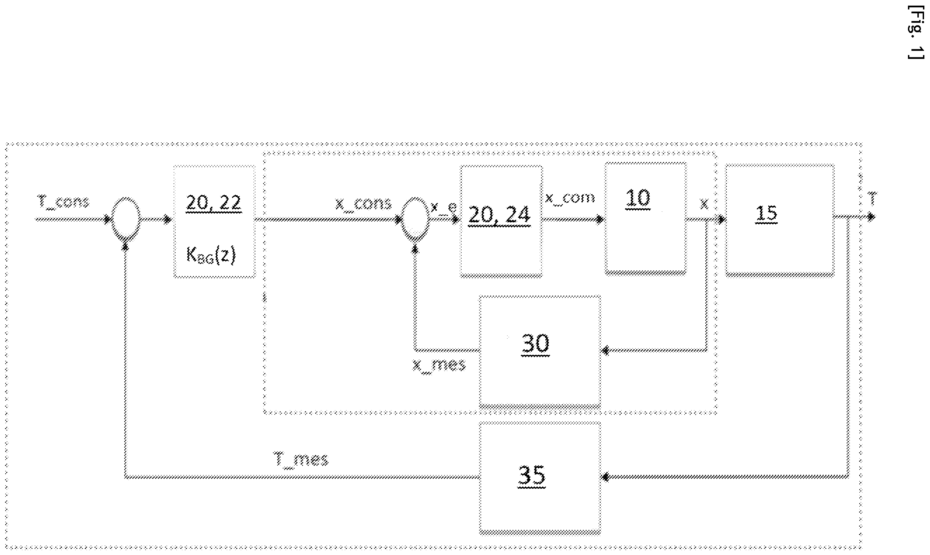

L'architecture de la régulation est schématisée sur la **figure 1** (avec une vanne 10 et un circuit d'huile 15). Cette **figure 1** sera décrite plus un peu plus en détail par la suite.

Toutefois, en utilisation, le Demandeur s'est aperçu que la vanne ne présente pas les caractéristiques de réponse attendues. Cela va être présenté ci-dessous.

### Modélisation de la situation

Tout d'abord, la réalité physique de la vanne a été modélisée. Pour cela, le modèle de vanne a d'abord été identifié précisément à l'aide d'échelons et de rampes de différentes pentes, c'est-à-dire en appliquant des échelons et des rampes de tension en entrée de la vanne et en observant la sortie, c'est-à-dire le déplacement de la vanne (ou sa vitesse). Ces différentes entrées comprennent des variations de commandes positives (telle qu'une variation de tension positive), qui tendent à faire déplacer la vanne dans une direction de fonctionnement positive F+, et des variations de commandes négatives (telle qu'une variation de tension négative), qui tendent à faire déplacer la vanne dans une direction de fonctionnement négative F-.

Les conclusions sont les suivantes.

Le comportement de la vanne est à peu près similaire en fonction des points de fonctionnement (c'est-à-dire quelle que soit la position initiale de la vanne, à tout le moins au premier ordre).

La vanne se comporte globalement comme une fonction de transfert du premier ordre avec un temps de réponse faible (transfert rapide) avec un retard pur faible, en réponse à une variation de commande positive.

La vanne se comporte globalement comme une fonction de transfert du premier ordre avec un temps de réponse bien plus important (transfert lent) avec un retard pur important, en réponse à une variation de commande négative.

La vanne a un comportement non linéaire. Or les stratégies de contrôle classiques reposent sur des modèles linéaires, ce qui génère des difficultés.

Le modèle résultant est finalement composé de deux fonctions de transfert du premier ordre avec des pôles différents (facteur 5 entre les pôles) et avec des retards purs différents.

Les essais sur banc ont ainsi permis d'observer une forte dissymétrie fonctionnelle de la vanne trois voies : le temps de réponse de la vanne s'avère différent en fonction du sens de déplacement de la vanne.

En effet, les efforts pour ouvrir la vanne d'un côté ou de l'autre ne sont pas forcément les mêmes (écoulement des fluides, cinématique des pièces).

Une structure de régulation traditionnelle pour la boucle locale ne peut pas gérer ce problème en répondant aux spécifications exigeantes (temps de réponse, dépassement, marges de stabilité), à la fois lors de variations de consigne positive et négative. Des répercussions sur la boucle globale surviennent. Dans le cas présent, la régulation en température n'est aussi plus bonne car la précision n'est plus respectée.

Cela pose évidemment des problèmes de régulation pour avoir un comportement homogène de la boucle locale et donc de la régulation complète.

Un correcteur « lent » synthétisé en considérant la fonction de transfert « rapide » ne permettra pas de respecter les exigences en termes de rapidité face au comportement lent du système lors de variations négatives de commande.

A l'inverse, un correcteur « rapide » synthétisé en considérant le comportement « lent » ne permettra pas de respecter les exigences en termes de dépassement face au comportement rapide du système lors de variations positives de commande.

Les solutions classiques d'asservissement ne permettent ainsi pas de respecter les spécifications à la fois en termes de vitesse et de dépassement.

Les documents EP-1 441 266 et US-6 745 084 divulguent un procédé de commande conforme au préambule de la revendication 1.

### PRESENTATION DE L'INVENTION

Selon un premier aspect, on prévoit un procédé de commande comme énoncé à la revendication 1.

Le correcteur associé à une direction de fonctionnement à réaction lente est rapide ; le correcteur associé à une direction de fonctionnement à réaction rapide est lent. Par rapide et lent, on entend un rapport relatif entre les deux, c'est-à-dire que le correcteur associé à une direction de fonctionnement lente est plus rapide (ou moins lent) que le correcteur associé à une direction de fonctionnement rapide.

En d'autres termes, comme une direction de fonctionnement est à réaction plus lente que l'autre, alors le correcteur associé à la direction de fonctionnement plus lente est un correcteur plus rapide que le correcteur associé à la direction de fonctionnement moins lente.

Dans un mode de réalisation, les correcteurs sont des correcteurs proportionnel-intégral.

Dans un mode de réalisation, le choix du correcteur à appliquer est fondé sur le signe d'un signal d'erreur correspondant à une différence entre un signal de consigne et un signal de mesure.

Dans un mode de réalisation, le choix du correcteur à appliquer est déterminé à l'aide d'un paramètre d'hystérésis, présentant un seuil différent en fonction des deux directions de fonctionnement, les deux seuils étant différents. Cela permet une stratégie de gestion des correcteurs qui évitent la présence d'oscillations d'un signal autour d'une valeur de référence, notamment autour de 0. Un premier seuil peut être positif et l'autre seuil peut être négatif.

Dans un mode de réalisation, le choix du correcteur à appliquer est déterminé à l'aide d'une dérivée de la sortie.

Dans un mode de réalisation, les paramètres des correcteurs sont variables en fonction des points de fonctionnement du mécanisme mécanique.

Dans un mode de réalisation, le mécanisme est une vanne d'un circuit hydraulique d'une turbomachine, par exemple pour alimenter en huile un réducteur.

Selon un second aspect, l'invention concerne un système de commande conforme à la revendication 7.

Ce système de commande est avantageusement configuré pour mettre en oeuvre les étapes du procédé décrit précédemment.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
[Fig. 1] La figure 1 illustre une boucle de gestion globale,
[Fig. 2] La figure 2 illustre une boucle locale avec les deux correcteurs en parallèle selon un mode de réalisation de l'invention.

### DESCRIPTION DETAILLEE

A présent, un mode de réalisation détaillée de la solution va être décrit. Cette solution est à nouveau expliquée en relation avec une vanne trois voies décrite en introduction. On se place dans le contexte décrit en partie « Modélisation de la situation ».

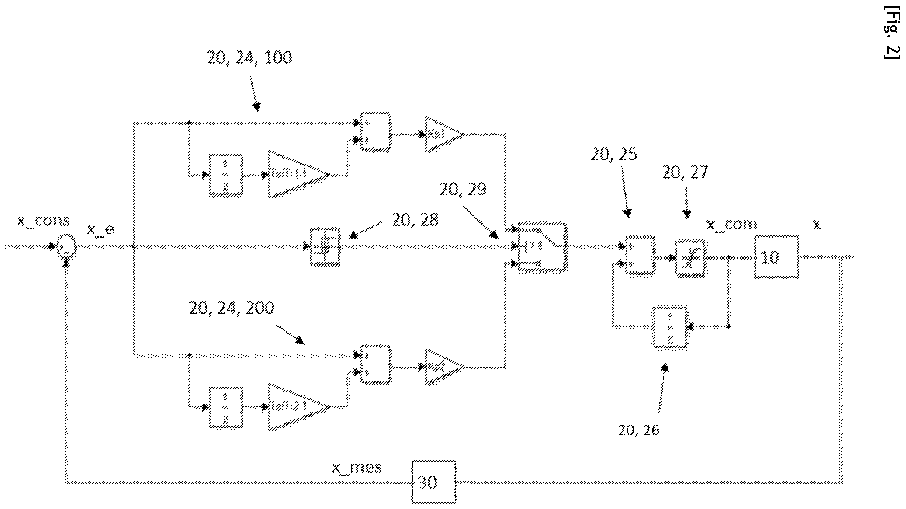

Un système de commande 1 et un procédé de commande seront décrits en référence aux **figures 1** **et** **2****.**

Ce système de commande comprend une vanne 10 par exemple de type trois voies (voie une, voie deux et voix trois) et un calculateur 20. Des capteurs 30 sont avantageusement prévus pour mesurer la position de la vanne 10. On définit trois positions P1, P2 et P3 à la vanne trois voies 10 :
- en position P1 (dite de butée), la voie trois (de sortie) est reliée à la voie une (huile en provenance d'un échangeur),
- en position P2 (dite aussi de butée), la voie trois est reliée à la voie deux (huile non refroidie),
- en position P3, la voie trois est reliée aux deux autres voies (cette position comprend en réalité une infinité de position, permettant de moduler les ratio des voies une et deux).

La position P1, respectivement P2, est typiquement obtenue lorsque la vanne 10 reçoit une consigne de 0 V et une commande de quelques Volts, par exemple 10 V.

La vanne 10 comprend deux directions de fonctionnement F+, F-. La direction de fonctionnement F+, F- peut concerner une rotation ou une translation ou un mélange des deux. Ainsi, deux directions de fonctionnement peuvent être une rotation en sens horaire F+ et la rotation inverse F-, ou une translation F+ et sa translation opposée F-.

Afin d'exemplifier la description, on définit arbitrairement la direction de fonctionnement F+ comme la direction de P1 vers P2, qui est lente, et la direction de fonctionnement F- comme la direction de P2 vers P1, qui est rapide.

On appelle x_cons la consigne de position de la vanne (qui est calculé par la boucle globale - voir la fonction de transfert K_{BG}(z) sur la **figure 1****),** x_com la consigne de commande de la vanne (en volt) et x la position de la vanne 10.

La dissymétrie fonctionnelle de la vanne signifie que la sortie x(t) n'évolue pas de la même façon pour deux consignes de commande x_com similaires mais relatives à une direction de fonctionnement F+, F-différente. En d'autres termes, le temps de réponse de la vanne est différent en fonction du sens de déplacement de la vanne 10.

Le capteur de position 30 permet de récupérer la mesure x_mes de la position de la vanne 10 **(****figures 1** **et** **2****).**

Le calculateur 20 intègre un module de consigne 22, capable de générer le signal de consigne x_cons et un module de commande 24, qui est capable de générer la consigne de commande x_com (typiquement en Volt).

Afin de résoudre le problème lié à la commande de la vanne dissymétrique de la vanne, le calculateur 20, plus précisément le module de commande 24, comprend deux correcteurs 100, 200 en parallèle **(****figure 2****),** paramétrés différemment et qui sont destinés à fonctionner chacun pour un des deux sens de fonctionnement F+, F-.

Le premier correcteur 100 est dit rapide et réglé sur la fonction de transfert de la vanne 10 du sens de fonctionnement F+ (de P1 vers P2, sens lent) avec le pâle lent et le retard pur important.

Le deuxième correcteur 200 est dit lent et réglé sur la fonction de transfert de la vanne 10 de l'autre sens de fonctionnement F- (de P2 vers P1, sens rapide) avec le pôle rapide et le retard pur faible.

Ces deux correcteurs 100, 200 ont pour but de rendre la vanne 10 à nouveau symétrique dans son fonctionnement.

Les correcteurs 100, 200 reçoivent en entrée un signal prenant en compte la différence entre le signal de consigne x_cons et le signal mesuré x_mes. Cette différence est appelée erreur x_e.

Les deux correcteurs 100, 200 possèdent des paramétrages différents.

Comme la vanne 10 peut être considérée comme une fonction de transfert du premier ordre avec retard pur, les deux correcteurs 100, 200 peuvent être de type proportionnel intégral (« PI ») pour lesquels deux paramètres de réglage sont nécessaires. De plus, ces deux paramètres conservent un sens physique, ce qui rend les réglages intuitifs.

On définit Kp1, Kp2 les gains proportionnels respectifs des correcteurs PI 100, 200, Ti1 et Ti2 les gains intégraux respectifs et Te le temps d'échantillonnage, pour un exemple en cas discret.

En paramétrant les deux correcteurs 100, 200 différemment, le calculateur 20 applique un traitement différent pour l'erreur x_e en fonction de la direction de fonctionnement F+, F- de la vanne 10, ce qui permet de compenser la dissymétrie fonctionnelle de cette dernière.

### Mode d'application du correcteur

L'utilisation des deux correcteurs 100, 200 étant alternative (soit le premier correcteur 100, soit le deuxième correcteur 200), il est avantageux d'implémenter un critère permettant de basculer sur l'un ou l'autre correcteur 100, 200.

A cet égard, plusieurs solutions sont envisageables.

La première solution consiste à tenir compte du signe de l'erreur x_e d'asservissement, c'est-à-dire la différence entre la consigne de position x_cons et le signal mesurée x_mes (x_e=x_cons-x_mes). Néanmoins, il y a un risque d'alternance importante notamment en régime permanent à cause du bruit sur la mesure de la position ou en cas de dépassement. En effet, en cas de dépassement, même minime, du signal de consigne x_cons par le signal mesuré x_mes, l'erreur x_e change de signe, ce qui implique un changement de correcteur 100, 200.

Une autre solution, préférée, consiste à introduire deux seuils pour générer un effet d'hystérésis.

Pour éviter les écueils de la solution précédente, un paramètre d'hystérésis 28, avec un commutateur 29 a été ajouté dans le but d'éviter d'alterner entre les deux correcteurs de manière intempestive lorsque le signal d'erreur x_e est proche de 0.

Comme le signal d'erreur x_e est généralement centré sur 0, les deux seuils d'hystérésis vont être respectivement positif et négatif.

Ainsi, il est nécessaire avec l'hystérésis que l'erreur x_e dépasse un seuil dans chacune des directions (positive et négative) avant de changer de correcteur.

Dans l'exemple présenté ici, le paramètre d'hystérésis est réglé en utilisant les informations suivantes :
- le bruit sur la mesure de la position est d'environ 0.03 V,
- le bruit sur la consigne de position est d'environ 0.02 V (en effet, la consigne de position est donnée par une boucle globale, soumise au bruit sur la mesure de température),
- les dépassements autorisés sont de 0.2 V,

La prise en compte dans le paramètre d'hystérésis du bruit x_e sur la mesure x_mes et sur la consigne x_cons permet de ne pas changer de correcteur à chaque fois que l'erreur x_e change de signe. En effet, l'erreur est très proche de 0 en régime permanent et celle-ci prendra des valeurs entre -0.05 et 0.05 V à cause du bruit.

La prise en compte du dépassement permet de ne pas changer de correcteur lors d'un dépassement faible. En effet, l'erreur change de signe lorsque la position va dépasser la consigne. Il peut être préférable de finir certains transitoires avec un même correcteur.

Le paramètre d'hystérésis est finalement choisi comme la somme de ces trois variables, à savoir = 0.25 V.

En supposant le correcteur 100 rapide sélectionné, le passage au correcteur 200 lent sera effectif quand l'erreur de position deviendra supérieure à 0.25 V.

En supposant le correcteur 200 lent sélectionné, le passage au correcteur rapide 100 sera effectif quand l'erreur de position deviendra inférieure à -0.25 V.

### Incrémenteur

Toutefois, il se peut que le changement de correcteur implémenté provoque des effets transitoires non désirés. En effet, les actions intégrales des correcteurs proportionnels intégral (et les états des fonctions de transfert des correcteurs dans le cas général) maintiennent une valeur de commande différente et le passage d'un correcteur à un autre se traduit par un pic de commande brutal.

Afin d'éviter ces pics, le calculateur 20 peut comprendre un incrémenteur 25, qui permet une implémentation de type incrémentale : celle-ci consiste à calculer les incréments de commande à partir des incréments d'erreur. La commande résultante est alors calculée comme la somme de la commande au pas précédent (boucle avec l'intégrateur 26) et de l'incrément de commande issu du correcteur 100, 200 sélectionné. Par exemple, si le correcteur 100 impose une tension de 5V et que le passage au correcteur 200 doit imposer une tension de 10V, en l'absence de l'incrémenteur 25, la tension changerait brusquement. Grâce à l'incrémenteur 25, le correcteur 200 va donner comme commande d'augmenter de +0,2 V, pour amener progressivement la tension de 5 à 10V.

Contrairement à l'implémentation classique, le changement de correcteur 100, 200 ne se traduit pas par un changement de commande mais d'incrément de commande.

Un saturateur 27 est aussi prévu pour gérer les effets de saturations : si une tension de 12V est calculée comme commande mais que le système ne peut accepter qu'une tension de 10V, le saturateur va transformer le 12V en 10V.

Cette stratégie permet également de gérer les saturations et les phénomènes de *windup.*

L'invention a été décrite pour une vanne mais s'applique à tout élément mécanique présentant un fonctionnement dissymétrique : un actionneur ou un vérin d'actionneur, etc (tout ensemble ou combinaison de servovalve, vérin).

## Revendications

1. Procédé de commande d'un mécanisme (10) ayant un comportement dissymétrique, le mécanisme (10) comprenant une première direction de fonctionnement (F+) et une deuxième direction de fonctionnement (F-), chaque direction présentant une réaction différente à un signal de commande similaire (x_com), le procédé de commande permettant de générer, à l'aide d'un module de commande (24) d'un calculateur (20), un signal de commande (x_com) à partir d'un signal de consigne (x_cons),
dans lequel :
- lorsque le signal de consigne (x_cons) indique de faire fonctionner le mécanisme (10) selon la première direction (F+), le module de commande (24) applique un premier correcteur (100) au signal de consigne (x_cons) pour générer un signal de commande (x_com), et
- lorsque le signal de consigne (x_cons) indique de faire fonctionner le mécanisme (10) selon la deuxième direction (F-), le module de commande (24) applique un deuxième correcteur (100) au signal de consigne (x_cons) pour générer un signal de commande (x_com), et dans lequel le premier et le deuxième correcteurs (100, 200) ont des paramètres (Kp1, Kp2, Ti1, Ti2) différents, afin de compenser le comportement dissymétrique du mécanisme (10),
**caractérisé en ce qu'**une direction de fonctionnement (F+, F-) est à réaction plus lente que l'autre et que le correcteur (100) associé à la direction de fonctionnement plus lente (F+) est un correcteur plus rapide que le correcteur associé à la direction de fonctionnement moins lente (F-).

2. Procédé selon la revendication 1, dans lequel les correcteurs (100, 200) sont des correcteurs proportionnel-intégral.

3. Procédé selon l'une quelconque des revendications 1 à 2, dans lequel le choix du correcteur (100, 200) à appliquer est déterminé à l'aide d'un paramètre d'hystérésis, présentant un seuil différent en fonction des deux directions de fonctionnement (F+, F-), les deux seuils étant différents.

4. Procédé selon l'une quelconque des revendications 1 à 3, dans lequel le choix du correcteur (100, 200) à appliquer est fondé sur le signe d'un signal d'erreur (x_e) correspondant à une différence entre un signal de consigne (x_cons) et un signal de mesure (x_mes).

5. Procédé selon l'une quelconque des revendications 1 à 4, dans lequel les paramètres des correcteurs (100, 200) sont variables en fonction des points de fonctionnement du mécanisme mécanique.

6. Procédé selon l'une quelconque des revendications 1 à 5, dans lequel le mécanisme (10) est une vanne d'un circuit hydraulique d'une turbomachine, par exemple pour un réducteur.

7. Système de commande (1) d'un mécanisme (10) ayant un comportement dissymétrique, le mécanisme (10) comprenant une première direction de fonctionnement (F+) et une deuxième direction de fonctionnement (F-), chaque direction présentant une réaction différente à un signal de commande similaire (x_com), le système de commande comprenant un module de commande (24) permettant de générer un signal de commande (x_com) à partir d'un signal de consigne (x_cons) reçu, le module de commande comprenant un premier correcteur (100) et un deuxième correcteur (200), les correcteurs (100, 200) ayant des paramètres différents, le premier correcteur (100) étant appliqué lorsque le signal de consigne (x_cons) indique de faire fonctionner le mécanisme (10) selon la première direction (F+), le second correcteur (200) étant appliqué lorsque le signal de consigne (x_cons) indique de faire fonctionner le mécanisme (10) selon la deuxième direction (F-), **caractérisé en ce qu'**une direction de fonctionnement (F+, F-) est à réaction plus lente que l'autre et que le correcteur (100) associé à la direction de fonctionnement plus lente (F+) est un correcteur plus rapide que le correcteur associé à la direction de fonctionnement moins lente (F-).

## Patentansprüche

1. Steuerverfahren für einen Mechanismus (10) mit asymmetrischem Verhalten, wobei der Mechanismus (10) eine erste Betriebsrichtung (F+) und eine zweite Betriebsrichtung (F-) umfasst, wobei jede Richtung eine unterschiedliche Reaktion auf ein ähnliches Steuersignal (x_com) aufweist, wobei das Steuerverfahren es ermöglicht, ein Steuersignal (x_com) aus einem Sollwertsignal (x_cons) mit Hilfe eines Steuermoduls (24) eines Computers (20) zu erzeugen,
bei dem:
- wenn das Sollwertsignal (x_cons) angibt, den Mechanismus (10) in der ersten Richtung (F+) zu betreiben, das Steuermodul (24) einen ersten Korrektor (100) auf das Sollwertsignal (x_cons) anwendet, um ein Steuersignal (x_com) zu erzeugen, und
- wenn das Sollwertsignal (x_cons) angibt, den Mechanismus (10) in der zweiten Richtung (F-) zu betreiben, das Steuermodul (24) einen zweiten Korrektor (100) auf das Sollwertsignal (x_cons) anwendet, um ein Steuersignal (x_com) zu erzeugen, und wobei der erste und der zweite Korrektor (100, 200) unterschiedliche Parameter (Kp1, Kp2, Ti1, Ti2) aufweisen, um das asymmetrische Verhalten des Mechanismus (10) zu kompensieren,
**dadurch gekennzeichnet, dass** eine Betätigungsrichtung (F+, F-) langsamer reagiert als die andere und dass der Korrektor (100), der der langsameren Betriebsrichtung (F+) zugeordnet ist, ein schnellerer Korrektor ist als der Korrektor, der der weniger langsamen Betriebsrichtung (F-) zugeordnet ist.

2. Verfahren nach Anspruch 1, bei dem die Korrektoren (100, 200) Proportional-Integral-Korrektoren sind.

3. Verfahren nach einem der Ansprüche 1 bis 2, bei dem die Wahl des anzuwendenden Korrektors (100, 200) mit Hilfe eines Hystereseparameters bestimmt wird, der je nach den beiden Betriebsrichtungen (F+, F-) einen unterschiedlichen Schwellenwert darstellt, wobei die beiden Schwellenwerte unterschiedlich sind.

4. Verfahren nach einem der Ansprüche 1 bis 3, bei dem die Wahl des anzuwendenden Korrektors (100, 200) auf dem Vorzeichen eines Fehlersignals (x_e) basiert, das einer Differenz zwischen einem Sollwertsignal (x_cons) und einem Messsignal (x_mes) entspricht.

5. Verfahren nach einem der Ansprüche 1 bis 4, bei dem die Parameter der Korrektoren (100, 200) entsprechend den Betriebspunkten des mechanischen Mechanismus variabel sind.

6. Verfahren nach einem der Ansprüche 1 bis 5, bei dem der Mechanismus (10) ein Ventil eines hydraulischen Kreislaufs einer Turbomaschine ist, zum Beispiel für ein Reduktionsgetriebe.

7. Steuersystem (1) für einen Mechanismus (10) mit asymmetrischem Verhalten, wobei der Mechanismus (10) eine erste Betriebsrichtung (F+) und eine zweite Betriebsrichtung (F-) umfasst, wobei jede Richtung eine unterschiedliche Reaktion auf ein ähnliches Steuersignal (x_com) aufweist, wobei das Steuersystem ein Steuermodul (24) umfasst, das es ermöglicht, ein Steuersignal (x_com) aus einem empfangenen Sollwertsignal (x_cons) zu erzeugen, wobei das Steuermodul einen ersten Korrektor (100) und einen zweiten Korrektor (200) umfasst, wobei die Korrektoren (100, 200) unterschiedliche Parameter aufweisen, wobei der erste Korrektor (100) angewendet wird, wenn das Sollwertsignal (x_cons) angibt, den Mechanismus (10) in der ersten Richtung (F+) zu betreiben, wobei der zweite Korrektor (200) angewendet wird, wenn das Sollwertsignal (x_cons) angibt, den Mechanismus (10) in der zweiten Richtung (F-) zu betreiben,
**dadurch gekennzeichnet, dass** eine Betriebsrichtung (F+, F-) langsamer reagiert als die andere und dass der Korrektor (100), der der langsameren Betriebsrichtung (F+) zugeordnet ist, ein schnellerer Korrektor ist als der Korrektor, der der weniger langsamen Betriebsrichtung (F-) zugeordnet ist.

## Claims

1. Method for controlling a mechanism (10) with asymmetrical behaviour, the mechanism (10) comprising a first operating direction (F+) and a second operating direction (F-), each direction having a different reaction to a similar control signal (x_com), the control method making it possible to generate, with the aid of a control module (24) of a computer (20), a control signal (x_com) from a setpoint signal (x_cons),
in which :
- when the setpoint signal (x_cons) indicates to operate the mechanism (10) in the first direction (F+), the control module (24) applies a first corrector (100) to the setpoint signal (x_cons) to generate a control signal (x_com), and
- when the setpoint signal (x_cons) indicates to operate the mechanism (10) in the second direction (F-), the control module (24) applies a second corrector (100) to the setpoint signal (x_cons) to generate a control signal (x_com)
and wherein the first and second correctors (100, 200) have different parameters (Kp1, Kp2, Ti1, Ti2), in order to compensate for the asymmetric behaviour of the mechanism (10),
**characterized in that** one operating direction (F+, F-) is slower in response than the other and that the corrector (100) associated with the slower operating direction (F+) is a faster corrector than the corrector associated with the slower operating direction (F).

2. A method according to claim 1, wherein the correctors (100, 200) are proportional-integral correctors.

3. A method according to any one of claims 1 to 2, wherein the choice of the corrector (100, 200) to be applied is determined with the aid of a hysteresis parameter, having a different threshold as a function of the two operating directions (F+, F-), the two thresholds being different.

4. A method according to any one of claims 1 to 3, wherein the choice of the corrector (100, 200) to be applied is based on the sign of an error signal (x_e) corresponding to a difference between a setpoint signal (x_cons) and a measurement signal (x_mes).

5. A method according to any one of claims 1 to 4, wherein the parameters of the correctors (100, 200) are variable depending on the operating points of the mechanical mechanism.

6. A method according to any one of claims 1 to 5, wherein the mechanism (10) is a valve of a hydraulic circuit of a turbomachine, for example for a gearbox.

7. A control system (1) for a mechanism (10) having an asymmetric behaviour, the mechanism (10) comprising a first operating direction (F+) and a second operating direction (F-), each direction having a different reaction to a similar control signal (x_com), the control system comprising a control module (24) for generating a control signal (x_com) from a received setpoint signal (x_cons), **characterized in that** the control system comprising a control module (24) for generating a control signal (x_com) from a received setpoint signal (x_cons), the control module comprising a first corrector (100) and a second corrector (200), the correctors (100, 200) having different parameters, the first corrector (100) being applied when the setpoint signal (x_cons) indicates to operate the mechanism (10) in the first direction (F+), the second corrector (200) being applied when the setpoint signal (x_cons) indicates to operate the mechanism (10) in the second direction (F-),
**characterised in that** one direction of operation (F+, F-) is slower in response than the other and the corrector (100) associated with the slower direction of operation (F+) is a faster corrector than the corrector associated with the slower direction of operation (F).
